Europäisches Patentamt

European Patent Office

Office européen des brevets

(11) Veröffentlichungsnummer : **0 355 757 B1**

# (12) EUROPÄISCHE PATENTSCHRIFT

(45) Veröffentlichungstag der Patentschrift :
**15.07.92 Patentblatt 92/29**

(21) Anmeldenummer : **89115336.3**

(22) Anmeldetag : **19.08.89**

(51) Int. Cl.⁵ : **H01S 3/23,** H01S 3/08,
H01S 3/07, H01S 3/03

---

(54) **Wellenleiter-Lasersystem.**

---

(30) Priorität : **26.08.88 DE 3828952**

(43) Veröffentlichungstag der Anmeldung :
**28.02.90 Patentblatt 90/09**

(45) Bekanntmachung des Hinweises auf die
Patenterteilung :
**15.07.92 Patentblatt 92/29**

(84) Benannte Vertragsstaaten :
**DE FR GB IT**

(56) Entgegenhaltungen :
**WO-A-81/02955**
**US-A- 3 379 998**
**US-A- 3 386 043**
**US-A- 4 559 627**
**US-A- 4 719 639**

(73) Patentinhaber : **DEUTSCHE
FORSCHUNGSANSTALT FÜR LUFT- UND
RAUMFAHRT e.V.
W-5300 Bonn (DE)**

(72) Erfinder : **Opower, Hans, Dr.
Sperberweg 13
W-8033 Krailling (DE)**

(74) Vertreter : **Hoeger, Stellrecht & Partner
Uhlandstrasse 14 c
W-7000 Stuttgart 1 (DE)**

EP 0 355 757 B1

**Beschreibung**

Die Erfindung betrifft ein elektrisch angeregtes, diffusionsgekühltes Lasersystem mit zwei in geringem Abstand voneinander angeordneten, einen optischen Wellenleiter bildenden Wandflächen, deren Breite ein Vielfaches ihres Abstandes beträgt und die einen strömungsfreien Entladungsraum zwischen sich einschließen, und mit einem optisch instabilen Resonator, dessen Resonatorstrahlenverlauf zumindest einen Teil des Entladungsraums durchsetzt und sich längs einer Resonatorachse erstreckt sowie eine zur Resonatorachse transversale Ausdehnung bis zu mindestens einem aus dem Resonator austretenden Laserstrahl aufweist, wobei die transversale Ausdehnung quer zu einer Längsrichtung des Wellenleiters und ungefähr parallel zu den Wandflächen verläuft.

Aus der US-PS 4 719 639 ist ein Lasersystem bekannt, bei welchem ein zwischen den Wandflächen des Wellenleiters liegender Entladungsraum von dem Resonatorstrahlenverlauf vollständig durchsetzt ist. Der Resonator ist dabei ein unsymmetrischer instabiler Resonator mit sphärischen Spiegeln, dessen Resonatorstrahlenverlauf seitlich und auch an dessen Enden über den Wellenleiter hinausreicht.

Da bei diffusionsgekühlten Wellenleiterlasern die Energie des austretenden Laserstrahls von der effektiv genutzten Fläche des Wellenleiters, bezogen auf dessen Wandflächen, abhängt und dieser in Längsrichtung nicht beliebig vergrößert werden kann, ist man bestrebt, den Wellenleiter so breit wie möglich auszuführen und auszunutzen. Bei der Verwendung der aus der US-PS 4 719 639 bekannten unsymmetrischen instabilen Resonatoren mit sphärischen Spiegeln sind jedoch der Länge und Breite des vom Resonatorstrahlenverlauf durchsetzten und ausgenutzten Entladungsraums und somit auch der effektiv nutzbaren Fläche des Wellenleiters durch die Krümmung der Spiegel Grenzen gesetzt, da bei einer zu großen Länge und/oder Breite keine zufriedenstellende Strahlqualität des Laserstrahls mehr erhältlich ist.

Der Erfindung liegt daher die Aufgabe zugrunde, ein Lasersystem der gattungsgemäßen Art derart zu verbessern, daß ohne Verlust der Strahlqualität beim austretenden Laserstrahl der Wellenleiter möglichst großflächig ausgeführt werden kann.

Diese Aufgabe wird erfindungsgemäß dadurch gelöst, daß am Resonator ein Laserverstärker zugeordnet ist, welcher mit seinem Verstärkerstrahlenverlauf einen weiteren Teil des Entladungsraums durchsetzt.

Gemäß dem Kern der vorliegenden Erfindung wird also der zwischen den Wandflächen des Wellenleiters zur Verfügung stehende Entladungsraum nicht ausschließlich von dem Resonatorstrahlenverlauf durchsetzt, sondern aufgeteilt, so daß lediglich ein Teil davon vom Resonatorstrahlenverlauf durchsetzt ist und ein weiterer Teil des Entladungsraums dazu dient, den aus dem Resonator austretenden Laserstrahl zu verstärken, so daß man, ohne das vom Resonator eingenommene Volumen des Entladungsraums zu vergrößern, mit einem größeren Entladungsraum, insbesondere einer größeren genutzten Fläche, des Wellenleiters arbeiten kann und dadurch eine außerhalb des Resonators bestehende Inversion im Entladungsraum durch den durch diesen hindurchtretenden Laserstrahl abräumt, so daß diese in genau der gleichen Weise wie im Resonator zur Verstärkung des Laserstrahls beitragen kann.

Um bei dem erfindungsgemäßen Lasersystem die vorteilhaften Strahlführungseigenschaften des Wellenleiters in Längsrichtung nicht zu verlieren, hat es sich als vorteilhaft erwiesen, wenn der Resonatorstrahlenverlauf und der Verstärkerstahlenverlauf zusammen eine transversale Ausdehnung aufweisen, welche maximal der Breite der Wandflächen entspricht, d. h. daß sowohl der Resonatorstrahlenverlauf zusammen mit dem Verstärkerstrahlenverlauf nicht seitlich über die Wandflächen des Wellenleiters hinausreichen und folglich über den gesamten Strahlenverlauf in Längsrichtung des Wellenleiters dessen strahlführende Eigenschaften zur Verfügung stehen.

Noch vorteilhafter hat es sich erwiesen, wenn der Resonatorstrahlenverlauf und der Verstärkerstrahlenverlauf vollständig in dem Entladungsraum liegen, d. h. also auch nicht an Enden des Wellenleiters über diesen hinausreichen.

Zur Ausnützung des zur Verfügung stehenden Entladungsraums ist es besonders günstig, wenn der Verstärkerstrahlenverlauf eine quer zu dem eintretenden Laserstrahl und ungefähr parallel zu den Wandflächen des Wellenleiters gerichtete transversale Ausdehnung aufweist, so daß mit dem Verstärkerstrahlenverlauf nahezu eine beliebige Breite des Wellenleiters überstrichen werden kann.

Dies ist mit beliebigen, die Richtung des Laserstrahls ändernden Mitteln, beispielsweise durch Brechung des Laserstrahls, erreichbar. Besonders zweckmäßig hat sich jedoch eine Lösung erwiesen, bei der der Laserverstärker eine den Laserstrahl fortlaufend mit einer transversalen Komponente reflektierende Optik aufweist.

Besonders zweckmäßig läßt sich diese reflektierende Optik dadurch realisieren, daß sie einen Verstärkerstrahlenverlauf ähnlich dem Strahlenverlauf eines instabilen Resonators aufweist.

Hinsichtlich der Anordnung von Resonator und Laserverstärker wurden bislang keine näheren Angaben gemacht. So ist es beispielsweise bei einem bevorzugten Ausführungsbeispiel zweckmäßig, wenn der Resonator und der Laserverstärker nebeneinanderliegend angeordnet sind.

Bei einem anderen bevorzugten Ausführungsbeispiel ist es zweckmäßig, wenn der Resonator und der Laserverstärker in Längsrichtung des Wellenleiters hintereinanderliegend angeordnet sind.

Eine besonders bevorzugte Anordnung von Laserverstärker und Resonator relativ zueinander sieht vor, daß der Laserverstärker eine optische Achse aufweist, welche parallel zur Längsrichtung des Wellenleiters verläuft.

Eine besonders zweckmäßige Anordnung von Laserverstärker und Resonator relativ zueinander sieht vor, daß der Laserverstärker eine optische Achse aufweist, welche parallel zur Resonatorachse liegt.

Insbesondere bei hintereinander liegender Anordnung hat es sich als günstig erwiesen, wenn die optische Achse des Laserverstärkers und die Resonatorachse koaxial zueinander angeordnet sind.

Bei den vorstehend beschriebenen Ausführungsbeispielen wurde nicht näher darauf eingegangen, wie ein aus dem Laserverstärker austretender Verstärkerlaserstrahl relativ zum Verstärkerstrahlenverlauf diesen verläßt. Besonders zweckmäßige Geometrien des Verstärkerstrahlenverlaufs und insbesondere eine besonders gute Strahlqualität des Verstärkerlaserstrahls lassen sich dann erreichen, wenn ein aus dem Laserverstärker austretender Verstärkerstrahl parallel, insbesondere koaxial zur optischen Achse des Verstärkers verläuft.

Bei den bisher beschriebenen Ausführungsformen wurden keine näheren Angaben zur Ausbildung des Resonators als solchem gemacht. So ist es zweckmäßig, wenn der Resonator ein konfokaler Resonator ist, um einen parallel zur Resonatorachse austretenden Laserstrahl zu erhalten.

Darüber hinaus ist es besonders günstig, wenn der Resonatorstrahlenverlauf äußere, parallel zueinander verlaufende Strahlen aufweist, so daß diese entweder längs von Seitenkanten des Wellenleiters oder in einem konstanten Abstand von Seitenkanten des Wellenleiters verlaufen können.

Bezüglich der relativen Anordnung der Resonatorachse zum Wellenleiter hat es sich als sehr zweckmäßig erwiesen, wenn die Resonatorachse in Längsrichtung des Wellenleiters verläuft.

Hinsichtlich der Ausbildung des optisch instabilen Resonators ist aus der US-PS 4 719 639 lediglich ein asymmetrischer instabiler Resonator bekannt. Zur optimalen Ausnützung der Breite des Wellenleiters hat es sich als zweckmäßig erwiesen, wenn der Resonator ein zur Resonatorachse symmetrischer Resonator ist, welcher sich ohne Einbuße an Qualität der austretenden Laserstrahlen doppelt so breit wie ein asymmetrischer Resonator ausführen läßt, allerdings den Nachteil hat, daß zwei Laserstrahlen auf gegenüberliegenden Seiten des Resonators aus diesem austreten.

Insbesondere beim letztgenannten Ausführungsbeispiel eines symmetrischen Resonators, bei welchem sich der Wellenleiter mit ausreichender Breite ausführen läßt, hat es sich als zweckmäßig erwiesen, wenn der Resonatorstrahlenverlauf sich maximal über die Breite des Wellenleiters erstreckt.

Besonders bei Verwendung eines zur Resonatorachse symmetrischen Resonators mit zwei austretenden Laserstrahlen bietet es große Vorteile, wenn der Laserverstärker mit einer zwei parallele Laserstrahlen zu einem einzigen Verstärkerlaserstrahl zusammenführenden Optik versehen ist, so daß neben einer besseren Ausnutzung des gesamten Entladungsraums der Laserverstärker zusätzlich noch die Möglichkeit bietet, den Nachteil eines zur Resonatorachse symmetrischen Resonators wieder auszugleichen.

In diesem Zusammenhang ist es auch sehr zweckmäßig, wenn der Verstärkerstrahlenverlauf äußere zueinander parallele Strahlen aufweist.

Schließlich läßt sich auch die Breite des Wellenleiters durch den Laserverstärker dadurch optimal nützen, daß der Verstärkerstrahlenverlauf sich maximal über die Breite des Wellenleiters erstreckt.

Hinsichtlich der Ausbildung der Spiegel des Laserverstärkers wurden bislang keine Ausführungen gemacht. Im Zusammenhang mit dem Wellenleiterlaser und einem möglichst günstigen, an den Wellenleiter anpaßbaren Strahlenverlauf ist es jedoch zweckmäßig, wenn der Laserverstärker konfokale Spiegel aufweist.

Alternativ dazu ist es bei einer Variante vorteilhaft, wenn der Laserverstärker Spiegel mit keilförmigen Spiegelflächen aufweist, wobei die einander zugewandten Spiegelflächen der jeweiligen Spiegel vorzugsweise parallel zueinander verlaufen.

Bei dem erfindungsgemäßen Lasersystem ist es wesentlich, daß sich der Resonatorstrahlenverlauf und der Verstärkerstrahlenverlauf optimal aneinander anpassen lassen, um durch den Übergang vom Resonator zum Laserverstärker keine Verluste in Kauf nehmen zu müssen. Aus diesem Grund sieht eine vorteilhafte Ausführungsform des erfindungsgemäßen Lasersystems vor, daß der Resonator und der Laserverstärker Spiegel mit identisch gekrümmten Spiegelflächen aufweisen, so daß dann, wenn diese auch noch konfokal zueinander angeordnet sind, sich sowohl im Resonator als auch im Laserverstärker zumindest ein ähnlicher Strahlenverlauf erreichen läßt.

Hinsichtlich der Ausbildung der Spiegel hat es sich als zweckmäßig erwiesen, wenn die Spiegel des Resonators mit ihren Spiegelflächen senkrecht auf den an diese angrenzenden Wandflächen stehen. Darüber hinaus ist es ebenfalls zweckmäßig, wenn die Spiegel des Laserverstärkers senkrecht auf denen an diese angrenzenden Wandflächen stehen. Eine besonders einfach herzustellende Ausführungsform des erfindungsgemäßen Lasersystems sieht vor, daß die Spiegel des Resonators und des Laserverstärkers zylindrische Spiegelflächen aufweisen.

Um eine möglichst kompakte Bauweise des erfindungsgemäßen Lasersystems zu erreichen, ist es von Vorteil, wenn die Spiegel des Resonators und des Laserverstärkers den Wellenleiter abschließen.

Bei den bisherigen Ausführungsbeispielen wurden hinsichtlich der Ausbildung des Wellenleiters keine näheren Angaben gemacht. So kann beispielsweise der Wellenleiter quer zur Längsrichtung gekrümmte Wandflächen aufweisen, welche im Extremfall einen Ring bilden können. Ein besonders einfaches Ausführungsbeispiel sieht jedoch vor, daß der Wellenleiter ein Bandleiter mit quer zur Längsrichtung gerade gerichteten Wandflächen ist.

Im Gegensatz zu konventionellen Hochleistungslasern läßt sich das erfindungsgemäße Lasersystem so ausführen, daß der Wellenleiter in Längsrichtung gekrümmt ist und im Extremfall einen geschlossenen Kreis bildet.

Alternativ dazu ist es jedoch auch denkbar, daß der Wellenleiter in Längsrichtung gewinkelt ist. Hierbei kann inbesondere bei dem erfindungsgemäßen Lasersystem vorgesehen sein, daß der Wellenleiter mindestens zwei Wellenleiterstücke umfaßt und daß ein Wellenleiterstück den Resonator und das andere den Laserverstärker aufnimmt.

Gemäß dem vorstehend beschriebenen Ausführungsbeispiel kann ein Wellenleiter einfach oder mehrfach gewinkelt sein. Hierbei ist es in jedem Fall jedoch zweckmäßig, wenn zwischen Wellenleiterstücken mit gerade gerichteter Längsrichtung mindestens ein Umlenkelement vorgesehen ist.

Somit können beispielsweise die Wellenleiterstücke parallel zueinander angeordnet und durch beispielsweise zwei Umlenkelemente gekoppelt sein.

Darüber hinaus wurden auch bezüglich der Ausbildung der Wandflächen keine näheren Angaben gemacht. So ist es beispielsweise möglich, daß die Wandflächen aus Metall sind und somit unmittelbar selbst die Elektroden für eine im Entladungsraum zu erzeugende Gasentladung bilden. Alternativ dazu ist es aber auch denkbar, daß die Wandflächen aus einem Dielektrikum hergestellt sind und auf ihrer Außenseite flächige Elektroden tragen, welche zusätzlich segmentiert sein können.

Da ein wesentlicher Vorteil des erfindungsgemäßen Lasersystems in der kompakten Bauweise, bedingt durch die Diffusionskühlung zu sehen ist, ist es zweckmäßig, wenn die Wandflächen aufweisende Wände mit Kühlkanälen durchsetzt sind.

Da der aus dem erfindungsgemäßen Lasersystem austretende Verstärkerlaserstrahl in der Regel einen rechteckförmigen Querschnitt aufweist, ist es zweckmäßig, den Verstärkerlaserstrahl mit einer zylindrischen Optik zu einem allseits symmetrischen Strahlenbündel aufzuweiten, da sich dieses dann in der nachfolgenden Optik in einfacher Weise punktförmig fokussieren läßt.

Weitere Merkmale und Vorteile der vorliegenden Erfindung sind Gegenstand der nachfolgenden Beschreibung sowie der zeichnerischen Darstellung einiger Ausführungsbeispiele. In der Zeichnung zeigen:

Fig. 1 eine perspektivische, teilweise aufgebrochene Ansicht eines ersten Ausführungsbeispiels;

Fig. 2 einen Schnitt längs Linie 2-2 in Fig. 1;

Fig. 3 einen Schnitt längs Linie 3-3 in Fig. 1;

Fig. 4 einen Schnitt ähnlich Fig. 2 durch eine Variante des ersten Ausführungsbeispiels;

Fig. 5 eine perspektivische teilweise aufgebrochene Ansicht eines zweiten Ausführungsbeispiels;

Fig. 6 einen Schnitt längs Linie 5-5 in Fig. 4;

Fig. 7 einen Schnitt längs Linie 6-6 in Fig. 4 und

Fig. 8 einen Schnitt ähnlich Fig. 2 durch ein drittes Ausführungsbeispiel.

Ein als Ganzes mit 10 bezeichnetes erstes Ausführungsbeispiel des erfindungsgemäßen Lasersystems zeigt einen als Ganzes mit 12 bezeichneten ebenen Wellenleiter, welcher eine obere, sich in einer Ebene erstreckende Wandfläche 14 und eine untere, parallel zur oberen Wandfläche in geringem Abstand verlaufende Wandfläche 16 umfaßt. Diese Wandflächen sind üblicherweise in einem Abstand von 1 bis 3 mm voneinander angeordnet. Der Wellenleiter 12 erstreckt sich dabei in Richtung einer Längsachse 18 und umfaßt quer zur Längsachse 18 eine Breite, welche ein Vielfaches des Abstandes der oberen Wandfläche 14 von der unteren Wandfläche 16 beträgt. Sowohl die obere Wandfläche 14 als auch die untere Wandfläche 16 bilden jeweils die Innenseite einer oberen Wand 20 oder einer unteren Wand 22 und sind für eine zu erzeugende Laserstrahlung reflektierend ausgebildet.

Die obere Wand 20 und die untere Wand 22 sind ihrerseits entweder aus Metall hergestellt oder aus einem dielektrischen Material, wobei sie im letzteren Fall den jeweiligen Wandflächen 14, 16 gegenüberliegend, d. h. also auf einer Außenseite angeordnete Metallelektroden 24, 26 tragen, welche ihrerseits mit einem Hochfrequenzgenerator 28 verbunden sind. Durch Anlegen einer Hochfrequenz im Bereich von MHz bis mehrere GHz, insbesondere im Bereich von 80 bis 400 MHz, entsteht in einem zwischen der oberen Wandfläche 14 und der unteren Wandfläche 16 liegenden und mit Lasergas gefüllten Entladungsraum 30 eine Gasentladung.

Hierbei wird als Lasergas CO oder $CO_2$, insbesondere $CO_2$ mit He, $N_2$ in üblichen Mischungsverhältnissen und vorteilhafterweise zusätzlich mit einem kleinen Anteil von Xe verwendet. Die Kühlung der Wände 20, 22 erfolgt über Kühlkanäle 23.

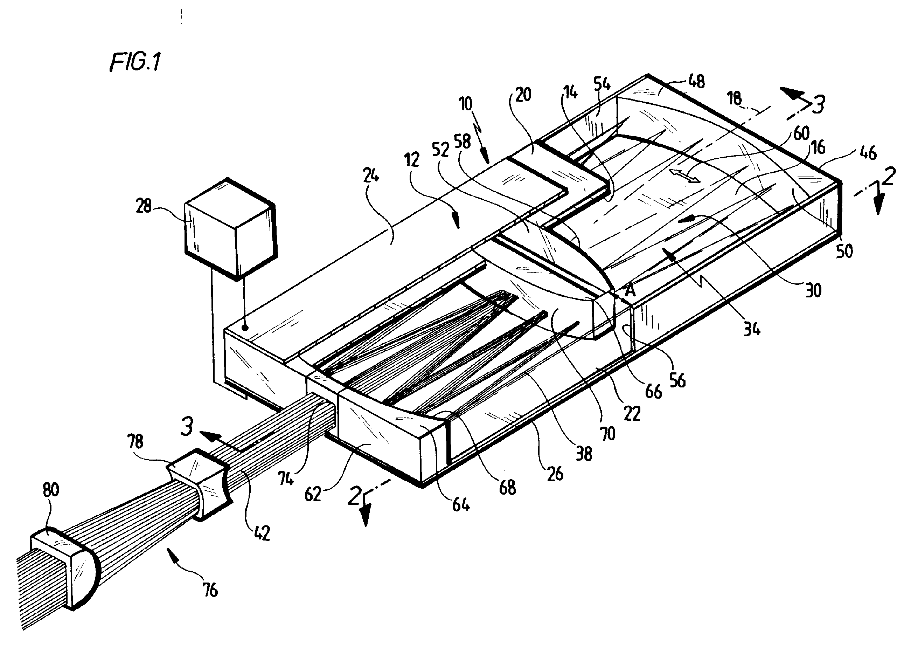

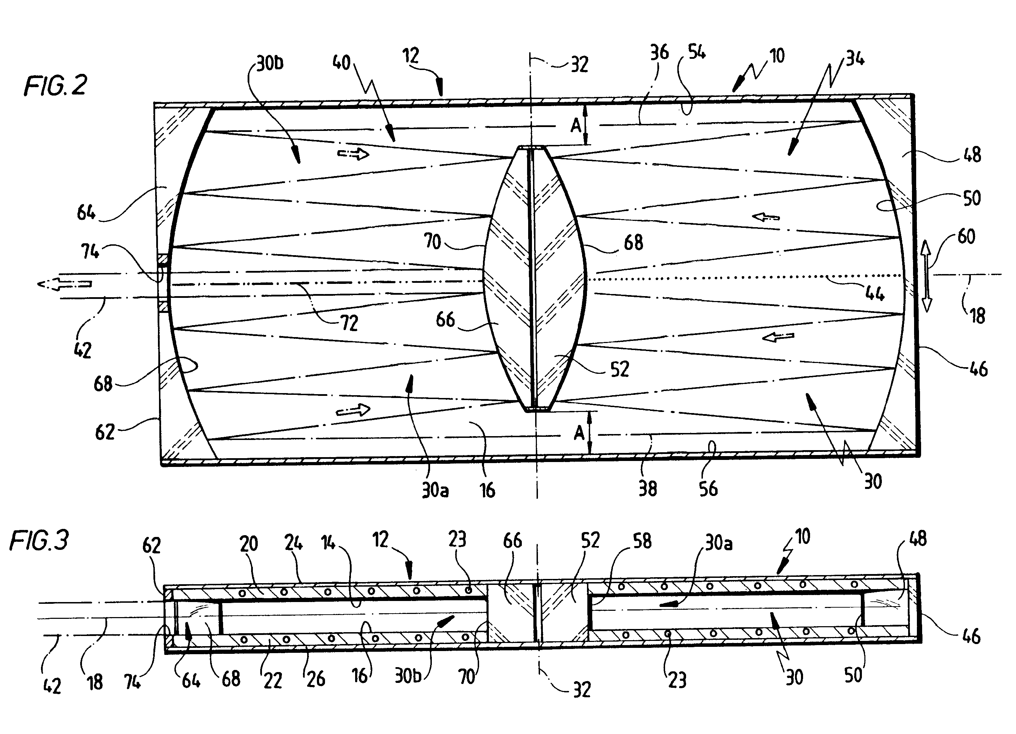

Wie in den Fig. 1 bis 3 dargestellt, ist der Wellenleiter 12 durch eine senkrecht auf der Längsachse 18 und den Wandflächen 14, 16 stehende Mittelebene 32 in zwei in Richtung der Längsachse 18 hintereinander liegende Hälften unterteilt. Dabei dient eine Hälfte 30a des Entladungsraums in Verbindung mit einem als Ganzes mit 34 bezeichneten Resonator zur Erzeugung von Laserstrahlen 36, 38, welche diesen Teil 30a des Entladungsraums durch die Mittelebene 32 hindurch verlassen, in den Teil 30b des Entladungsraums 30 übertreten und dort in einem als Ganzes mit 40 bezeichneten Laserverstärker zu einem aus diesem austretenden Verstärkerlaserstrahl 42 verstärkt werden.

Der Resonator 34 ist als konfokaler Resonator ausgebildet, welcher eine als Resonatorachse bezeichnete optische Achse 44 aufweist, die sich ihrerseits parallel zur Längsachse 18 des Wellenleiters 12 erstreckt und mittig im Wellenleiter 12 verläuft. Im einzelnen umfaßt der Resonator 34 einen an einem hinteren Ende 46 des Wellenleiters 12 angeordneten und sich im wesentlichen über dessen gesamte Breite erstreckenden konkaven Laserspiegel 48 mit einer zylindrischen Spiegelfläche 50, welche senkrecht auf den Wandflächen 14, 16 steht und ebenfalls senkrecht zur Resonatorachse 44 in einem Schnittpunkt mit dieser verläuft. Dieser konkave Laserspiegel 48 dient dabei als Abschluß des Wellenleiters 12 an dessen hinterem Ende 46.

Gegenüberliegend dem konkaven Laserspiegel 48 ist ein konvexer Laserspiegel 52 im Bereich der Mittelebene 32 angeordnet, welcher sich nicht über die gesamte Breite des Wellenleiters 12 erstreckt, sondern beiderseits in einem Abstand A von einer rechten Seitenkante 54 bzw. einer linken Seitenkante 56 des Wellenleiters 12 endet. Auch der konvexe Laserspiegel ist mit einer zylindrischen Spiegelfläche 58 versehen, welche senkrecht auf den Wandflächen 14, 16 steht und außerdem senkrecht zur Resonatorachse 44 im Schnittpunkt mit dieser verläuft.

Der Fokus der beiden Laserspiegel 48, 52 liegt dabei auf einer dem Resonator 34 gegenüberliegenden Seite der Mittelebene 32.

Ein derartiger symmetrischer konfokaler Resonator 34 hat nun einen Strahlenverlauf, welcher beginnend im Bereich der Resonatorachse in transversaler Richtung 60 zu dieser sich bis zu dem rechts der Resonatorachse 44 liegenden rechten Laserstrahl 36 und dem links der Resonatorachse 44 liegenden linken Laserstrahl 38 hin ausdehnt, wobei sowohl der rechte Laserstrahl 36 als auch der linke Laserstrahl 38 parallel zu den rechten bzw. linken Seitenkanten 54 bzw. 56 verlaufen, so daß der Strahlenverlauf des Resonators 34 sich maximal bis zu der rechten bzw. linken Seitenkante 54 bzw. 56 erstreckt.

Diese beiden Laserstrahlen haben nun aufgrund des Abstandes A des konvexen Laserspiegels 52 von den Seitenkanten 54 bzw. 56 die Möglichkeit, durch die Mittelebene 32 hindurchzutreten und in den Laserverstärker 40 zu gelangen.

Dieser Laserverstärker 40 umfaßt seinerseits einen im Bereich eines vorderen Endes 62 angeordneten konkaven Verstärkerspiegel 64, welcher sich im wesentlichen über die gesamte Breite des Wellenleiters 12 erstreckt. Diesem gegenüberliegend ist im Bereich der Mittelebene 32 ein konvexer Verstärkerspiegel 66 Rücken an Rücken zu dem konvexen Laserspiegel 52 angeordnet, welcher in gleicher Weise wie der konvexe Laserspiegel 52 einen Abstand A von der rechten bzw. linken Seitenkante 54 bzw. 56 aufweist. Sowohl der konkave Verstärkerspiegel 64 als auch der konvexe Verstärkerspiegel 66 sind konfokal zueinander angeordnet und weisen beide zylindrische Spiegelflächen 68 bzw. 70 auf, welche ihrerseits senkrecht auf den Wandflächen 14, 16 stehen. Der Fokus beider Verstärkerspiegel 64, 66 liegt dabei auf der dem Laserverstärker 40 gegenüberliegenden Seite der Mittelebene 32. Außerdem sind die beiden Verstärkerspiegel 64, 66 so angeordnet, daß sie symmetrisch zu einer optischen Achse 72 des Laserverstärkers 40 liegen, wobei die optische Achse 72 koaxial zur Resonatorachse 44 verläuft, so daß also sowohl der Resonator 34 als auch der Laserverstärker 40 eine gemeinsame optische Achse besitzen.

Darüber hinaus ist die Krümmung der Spiegelflächen 50 bzw. 58 sowie 68 bzw. 70 identisch, so daß eine Optik des Laserverstärkers 40, gebildet durch die Verstärkerspiegel 64 bzw. 66, einen Verstärkerstrahlenverlauf aufweist, welcher mit dem Strahlenverlauf des Resonators 34 von der Geometrie her identisch ist mit dem einzigen Unterschied, daß im Laserverstärker 40 die beiden eintretenden Laserstrahlen 36 und 38 zur optischen Achse 72 hin reflektiert werden, so daß sich der Verstärkerlaserstrahl 42 koaxial zur optischen Achse 72 ausbildet. Um einen Austritt desselben aus dem Verstärker 40 zu ermöglichen, ist der konkave Verstärkerspiegel 64 mit einem mittigen Durchbruch 74 versehen, welcher eine Breite aufweist, die kleiner 2A und größer A ist und eine Höhe, welche dem Abstand der Wandflächen 14, 16 voneinander entspricht.

Somit kann der Verstärkerlaserstrahl 42 aus dem vorderen Ende 62 des Wellenleiters 12 austreten und wird anschließend durch eine Zylinderoptik 76, umfassend eine zylindrische Zerstreuungslinse 78 sowie eine nachfolgend angeordnete zylindrische Sammellinse 80, zu einem allseits symmetrischen Strahl aufgeweitet, welcher anschließend in einfacher Weise fokussierbar ist.

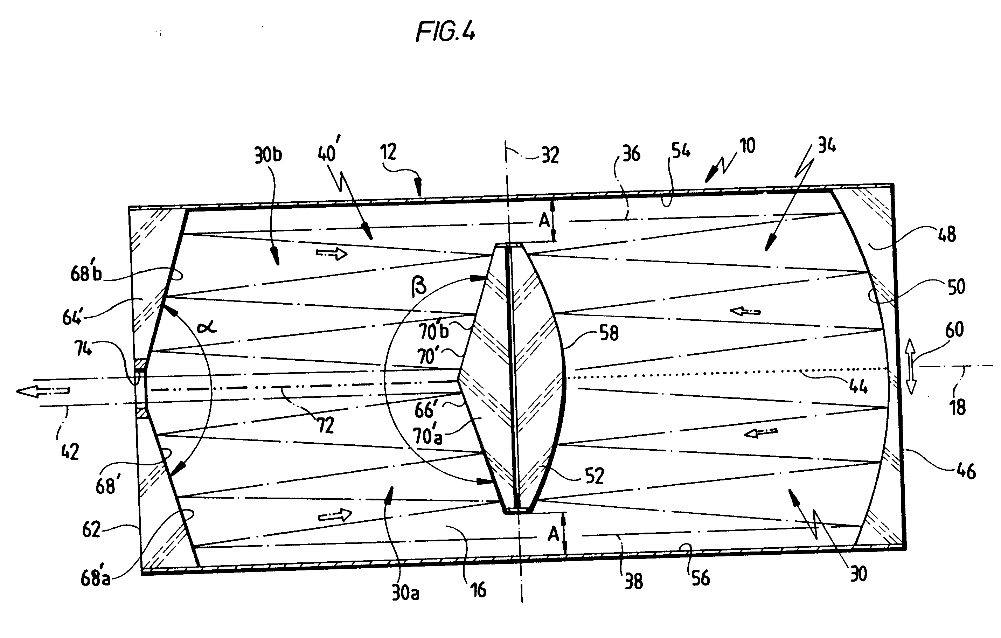

Bei einer Variante des ersten Ausführungsbeispiels, dargestellt in Fig. 4, sind diejenigen Teile, die mit denen des ersten Ausführungsbeispiels identisch sind, mit denselben Bezugszeichen versehen, so daß hinsichtlich deren Beschreibung auf die Ausführungen zum ersten Ausführungsbeispiel verwiesen werden kann.

Im Gegenteil zum ersten Ausführungsbeispiel sind die Spiegelflächen 68' und 70' der Verstärkerspiegel 64' und 66' nicht gewölbt, sonder aus zwei gerade gerichteten Segmenten 68'a und 68'b sowie 70'a und 70'b zusammengesetzt, wobei sich diese jeweils in der optischen Achse 72 schneiden, und einen Winkel $\alpha$ bzw. $\beta$ miteinander einschließen, wobei $\alpha + \beta$ stets 360. beträgt. Außerdem verläuft die optische Achse 72 stets als Winkelhalbierende zu den Winkeln $\alpha$ und $\beta$, d. h., daß jeweils die Spiegelflächen 68'a und 70'a sowie die Spiegelflächen 68'b und 70'b zueinander parallel verlaufen.

Die Laserstrahlen 36 und 38 werden nun in der gleichen Weise wie beim ursprünglichen ersten Ausführungsbeispiel in Richtung der optischen Achse 72 reflektiert, wobei allerdings keine Veränderung der Abbildung, insbesondere keine Verkleinerung der Breite der Laserstrahlen 36 und 38 erfolgt, so daß ein Verstärkerlaserstrahl 42' aus dem Verstärker 40' austritt, welcher dieselbe Breite wie jeder der Laserstrahlen 36 und 38 aufweist, die in den Verstärker 40' eintreten, aber die doppelte Intensität.

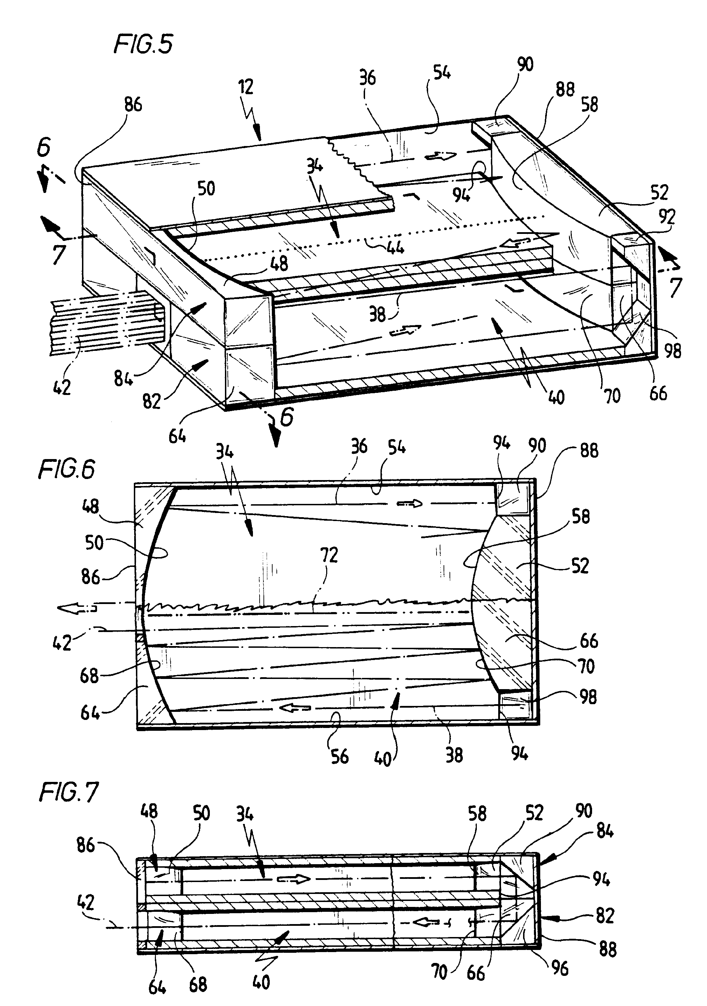

Ein zweites Ausführungsbeispiel des erfindungsgemäßen Lasers, dargestellt in den Fig. 5 bis 7, ist, insoweit als es dieselben Teile wie das erste Ausführungsbeispiel aufweist, mit denselben Bezugszeichen versehen, so daß bezüglich deren Beschreibung auf die Ausführungen zum ersten Ausführungsbeispiel verwiesen werden kann.

Im Gegensatz zum ersten Ausführungsbeispiel sind der Laserverstärker 40 und der Resonator 34 in dem Wellenleiter 12 nicht hintereinander angeordnet, sondern in zwei übereinander liegenden gleichlangen Wellenleiterstücken 82 und 84. Der Resonator 34 liegt dabei in dem oberen Wellenleiterstück 84, während der Laserverstärker 40 in dem unteren Wellenleiterstück 82 liegt.

Bei dieser Anordnung ist es nun möglich, den konkaven Laserspiegel 48 über dem konkaven Verstärkerspiegel 64 sowie den konvexen Laserspiegel 52 über dem konvexen Verstärkerspiegel 66 anzuordnen, was insbesondere dann Vorteile bietet, wenn deren Spiegelflächen 50 und 68 sowie 58 und 70 dieselbe Krümmung aufweisen, da dann der konkave Laserspiegel 48 und der konkave Verstärkerspiegel 64 sowie der konvexe Laserspiegel 52 und der konvexe Verstärkerspiegel 66 einstückig ausgebildet sein können.

Bei dem zweiten Ausführungsbeispiel liegt somit an einem vorderen Ende 86 des Wellenleiterstücks 84 der konkave Laserspiegel 48, welcher sich ebenfalls über die gesamte Breite dieses Wellenleiterstücks 84 erstreckt. Dieser reflektiert zu dem konvexen Laserspiegel 52, welcher nunmehr an einem hinteren Ende 88 des Wellenleiterstücks 84 liegt. Um nun im Bereich des konvexen Laserspiegels 52 die beiden längs der Seitenkanten 54 und 56 verlaufenden Laserstrahlen 36 und 38 in den Laserverstärker 40 umzulenken, sind beiderseits des konvexen Laserspiegels 52 rechte und linke Umlenkspiegel 90 bzw. 92 angeordnet, welche die Laserstrahlen 36 bzw. 38 durch Durchbrüche 94 hindurch in das untere Wellenleiterstück 82 umlenken, in welchem sie wiederum auf linke und rechte Umlenkspiegel 96 bzw. 98 treffen und von diesen wieder parallel zur optischen Achse 72 des Laserverstärkers 40 umgelenkt werden.

Der Resonatorstrahlenverlauf und der Verstärkerstrahlenverlauf sind mit dem des ersten Ausführungsbeispiels identisch, so daß mittig des unteren Wellenleiterstücks 82 und koaxial zur optischen Achse 72 des Laserverstärkers 40 der Verstärkerlaserstrahl 42 austritt, welcher wiederum in bekannter Weise zu einem allseits symmetrischen Strahl aufgeweitet werden kann.

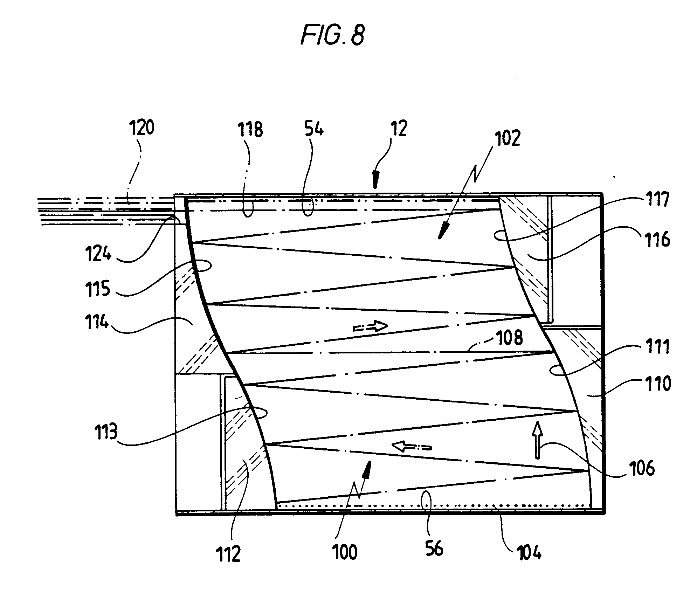

Ein drittes, eine Einfachversion darstellendes Ausführungsbeispiel des erfindungsgemäßen Lasersystems - dargestellt in Fig. 8 - ist von der Ausbildung des Wellenleiters 12 her gesehen identisch aufgebaut wie das erste Ausführungsbeispiel, so daß insoweit auf dieses Bezug genommen wird.

Allerdings sind in dem Wellenleiter 12 ein Resonator 100 und ein Laserverstärker 102 nebeneinander angeordnet und erstrecken sich gemeinsam über die gesamte Breite des Wellenleiters 12 von der rechten Seitenkante 54 bis zur linken Seitenkante 56.

Dieser Resonator 100 stellt eine "rechte Hälfte" des Resonators 34 dar, da eine Resonatorachse 104 desselben längs der Seitenkante 56 des Wellenleiters 12 verläuft. Von dieser Resonatorachse 104 ausgehend erstreckt sich der Resonatorstrahlenverlauf lediglich in einer transversalen Richtung 106 bis zu einem den Resonator 100 verlassenden Laserstrahl 108. Ein konkaver Laserspiegel 110 stellt dabei genau die Hälfte des konkaven Laserspiegels 48 dar und ein konvexer Laserspiegel 112 die Hälfte des konvexen Laserspiegels 52. Unmittelbar an diesen konvexen Laserspiegel 112 schließt sich ein konkaver Verstärkerspiegel 114 an, welcher seinerseits ebenfalls wiederum eine Hälfte des konkaven Verstärkerspiegels 64 darstellt, während ein sich unmittelbar seitlich an den konkaven Laserspiegel anschließender konvexer Verstärkerspiegel 116 eine Hälfte des konvexen Verstärkerspiegels 66 darstellt. Somit verläuft eine optische Achse 118 des Laserverstärkers 102 längs der Seitenkante 54 des Wellenleiterstücks 12 und ein austretender Verstärkerlaserstrahl 120 erstreckt sich von der optischen Achse 118 in Richtung auf den Resonator 100. Sowohl die Laserspiegel 110, 112 als auch die Verstärkerspiegel 114, 116 sind konfokale zylindrische Spiegel mit identischen gekrümmten Spiegelflächen 111, 113, 115, 117 genau wie beim ersten Ausführungsbeispiel. Die Laserspiegel und die Verstärkerspiegel können dabei unmittelbar aneinander anschließen, da der konvexe Laserspiegel 112 um eine Breite A schmäler ist als der konkave Laserspiegel 110 und andererseits aber wieder der konkave Verstärkerspiegel 114 um die Breite A breiter ist als der konvexe Verstärkerspiegel 116.

Das dritte Ausführungsbeispiel arbeitet nun so, daß ein im Resonator 100 erzeugter Laserstrahl von der Resonatorachse 104 in transversaler Richtung 106 bis zum Laserstrahl 108 wandert, wobei der Laserstrahl 108 vom konkaven Laserspiegel 110 unmittelbar auf den diesem gegenüberliegenden konkaven Verstärkerspiegel 114 trifft, welcher seinerseits nun wieder diesen Laserstrahl auf den konvexen Verstärkerspiegel 116 reflektiert, so daß der Laserstrahl nun den Laserverstärker 102 in Querrichtung 122 bis zur optischen Achse 118 durchläuft und als Verstärkerlaserstrahl 120 durch einen Durchbruch 124 im konkaven Verstärkerspiegel 114 den Laserverstärker 102 verläßt. Dieser kann nun ebenfalls mit einer im Zusammenhang mit dem ersten Ausführungsbeispiel beschriebenen Zylinderoptik zu einem allseits symmetrischen Strahl aufgeweitet werden.

## Patentansprüche

1. Elektrisch angeregtes, diffusionsgekühltes Lasersystem mit zwei in geringem Abstand voneinander angeordneten, einen optischen Wellenleiter bildenden Wandflächen (14,16), deren Breite ein Vielfaches ihres Abstandes beträgt und die einen strömungsfreien Entladungsraum zwischen sich einschließen, und mit einem optisch instabilen Resonator (34,100), dessen Resonatorstrahlenverlauf zumindest einen Teil des Entladungsraums durchsetzt und sich längs einer Resonatorachse erstreckt, sowie eine zur Resonatorachse transversale Ausdehnung bis zu mindestens einem aus dem Resonator austretenden Laserstrahl aufweist, wobei die transversale Ausdehnung quer zu einer Längsrichtung des Wellenleiters und ungefähr parallel zu den Wandflächen verläuft,
**dadurch gekennzeichnet,**
daß dem Resonator (34,100) ein Laserverstärker (40,102) nachgeordnet ist, welcher mit seinem Verstärkerstrahlenverlauf einen weiteren Teil des Entladungsraums (30) durchsetzt.

2. Lasersystem nach Anspruch 1, dadurch gekennzeichnet, daß der Resonatorstrahlenverlauf und der Verstärkerstrahlenverlauf zusammen eine Ausdehnung in transversaler Richtung (60,106) aufweisen, welche maximal der Breite der Wandflächen (14,16) entspricht.

3. Lasersystem nach Anspruch 2, dadurch gekennzeichnet, daß der Resonatorstrahlenverlauf und der Verstärkerstrahlenverlauf vollständig in dem Entladungsraum (30) liegen.

4. Lasersystem nach einem der voranstehenden Ansprüche, dadurch gekennzeichnet, daß der Verstärkerstrahlenverlauf eine quer zu dem eintretenden Laserstrahl (36,38,108) und ungefähr parallel zu den Wandflächen (14,16) des Wellenleiters (12) gerichtete Ausdehnung in transversaler Richtung (60,106) aufweist.

5. Lasersystem nach Anspruch 4, dadurch gekennzeichnet, daß der Laserverstärker (40,102) eine den Laserstrahl (36,38,108) fortlaufend mit einer transversalen Komponente reflektierende Optik (64,66;114,116) aufweist.

6. Lasersystem nach Anspruch 5, dadurch gekennzeichnet, daß die Optik (64,66;114,116) einen Verstärkerstrahlenverlauf ähnlich dem Strahlenverlauf eines instabilen Resonators aufweist.

7. Lasersystem nach einem der voranstehenden Ansprüche, dadurch gekennzeichnet, daß der Resonator (34,100) und der Laserverstärker (40,102) nebeneinanderliegend angeordnet sind.

8. Lasersystem nach einem der Ansprüche 1 bis 6, dadurch gekennzeichnet, daß der Resonator (34) und der Laserverstärker (40) in Längsrichtung (18) des Wellenleiters (12) hintereinanderliegend angeordnet sind.

9. Lasersystem nach einem der voranstehenden Ansprüche, dadurch gekennzeichnet, daß der Laserverstärker (40,102) eine optische Achse (72,118) aufweist, welche parallel zur Längsrichtung (18) des Wellenleiters (12) verläuft.

10. Lasersystem nach einem der voranstehenden Ansprüche, dadurch gekennzeichnet, daß der Laserverstärker (40,102) eine optische Achse (82,118) aufweist, welche parallel zur Resonatorachse (44,104) liegt.

11. Lasersystem nach Anspruch 9 oder 10, dadurch gekennzeichnet, daß die optische Achse (72) des Laserverstärkers (40) und die Resonatorachse (44) koaxial zueinander angeordnet sind.

12. Lasersystem nach einem der Ansprüche 9 bis 11, dadurch gekennzeichnet, daß ein aus dem Laserverstärker (40,102) austretender Verstärkerlaserstrahl (42,120) parallel zur optischen Achse (72,118) des Laserverstärkers (40,102) verläuft.

13. Lasersystem nach einem der voranstehenden Ansprüche, dadurch gekennzeichnet, daß der Resonator (34,100) ein konfokaler Resonator ist.

14. Lasersystem nach einem der voranstehenden Ansprüche, dadurch gekennzeichnet, daß der Resonatorstrahlenverlauf äußere, parallel zueinander verlaufende Strahlen (36,38) aufweist.

15. Lasersystem nach einem der voranstehenden Ansprüche, dadurch gekennzeichnet, daß die Resonatorachse (44,104) in Längsrichtung (18) des Wellenleiters (12) verläuft.

16. Lasersystem nach einem der voranstehenden Ansprüche, dadurch gekennzeichnet, daß der Resonator (34) ein zur Resonatorachse (44) symmetrischer Resonator ist.

17. Lasersystem nach einem der voranstehenden Ansprüche, dadurch gekennzeichnet, daß der Resonatorstrahlenverlauf sich maximal über die Breite des Wellenleiters (12) erstreckt.

18. Lasersystem nach einem der voranstehenden Ansprüche, dadurch gekennzeichnet, daß der Laserverstärker (40) mit einer zwei parallele Laserstrahlen (36,38) zu einem einzigen Verstärkerlaserstrahl (42) zusammenführenden Optik (64,66) versehen ist.

19. Lasersystem nach einem der voranstehenden Ansprüche, dadurch gekennzeichnet, daß der Verstärkerstrahlenverlauf äußere, zueinander parallele Strahlen (36,38) aufweist.

20. Lasersystem nach einem der voranstehenden Ansprüche, dadurch gekennzeichnet, daß der Verstärkerstrahlenverlauf sich maximal über die Breite des Wellenleiters (12) erstreckt.

21. Lasersystem nach einem der voranstehenden Ansprüche, dadurch gekennzeichnet, daß der Laserverstärker (40,102) konfokale Spiegel (64,66;114,116) aufweist.

22. Lasersystem nach einem der Ansprüche 1 bis 20, dadurch gekennzeichnet, daß der Laserverstärker (40′) Spiegel (64′,66′) mit keilförmigen Spiegelflächen (68′,70′) aufweist.

23. Lasersystem nach einem der voranstehenden Ansprüche, dadurch gekennzeichnet, daß der Resonator (34,100) und der Laserverstärker (40,102) Spiegel (48,52;110, 112;64,66;114,116) mit identisch gekrümmten Spiegelflächen (50,58;68,70;111,113;115,117) aufweisen.

24. Lasersystem nach einem der voranstehenden Ansprüche, dadurch gekennzeichnet, daß die Spiegel (48,52;110, 112) des Resonators (34,100) mit ihren Spiegelflächen (50,58,111,113) senkrecht auf den an diese angrenzenden Wandflächen (14,16) stehen.

25. Lasersystem nach einem der voranstehenden Ansprüche, dadurch gekennzeichnet, daß die Spiegel (64,66;114, 116) des Laserverstärkers (40,102) mit ihren Spiegelflächen (68,70,115,117) senkrecht auf den an diese angrenzenden Wandflächen (14,16) stehen.

26. Lasersystem nach Anspruch 25, dadurch gekennzeichnet, daß die Spiegel (48,52;110,112;64,66;114,116) des Resonators (34,100) und des Laserverstärkers (40,102) zylindrische Spiegelflächen (50,58,68,70;111,113,115,117) aufweisen.

27. Lasersystem nach einem der voranstehenden Ansprüche, dadurch gekennzeichnet, daß die Spiegel (48,52;110, 112;64,66;114,116) des Resonators (34,100) und des Laserverstärkers (40,102) den Wellenleiter (12) abschließen.

28. Lasersystem nach einem der voranstehenden Ansprüche, dadurch gekennzeichnet, daß der Wellenleiter (12) ein Bandleiter mit quer zur Längsrichtung gerade gerichteten Wandflächen (14,16) ist.

29. Lasersystem nach einem der voranstehenden Ansprüche, dadurch gekennzeichnet, daß der Wellenleiter (12) in Längsrichtung (18) gewinkelt ist.

30. Lasersystem nach Anspruch 29, dadurch gekennzeichnet, daß der Wellenleiter (12) mindestens zwei Wellenleiterstücke (82,84) umfaßt und daß ein Wellenleiterstück (84) den Resonator (34) und das andere (82) des Laserverstärker (40) aufnimmt.

31. Lasersystem nach Anspruch 29 oder 30, dadurch gekennzeichnet, daß zwischen den Wellenleiterstükken (82,84) mit gerade gerichteter Längsrichtung mindestens ein Umlenkelement (92,94,98) vorgesehen ist.

32. Lasersystem nach einem der voranstehenden Ansprüche, dadurch gekennzeichnet, daß die Wandflächen (14,16) aus Metall sind.

33. Lasersystem nach einem der Ansprüche 1 bis 31, dadurch gekennzeichnet, daß die Wandflächen (14,16) aus einem Dielektrikum hergestellt sind und auf ihrer Außenseite flächige Elektroden (24,26) tragen.

34. Lasersystem nach einem der voranstehenden Ansprüche, dadurch gekennzeichnet, daß ein aus dem Laserverstärker (40) austretender Verstärkerlaserstrahl (42) mit einer zylindrischen Optik (76) zu einem allseits symmetrischen Strahlenbündel aufgeweitet ist.

## Claims

1. An electrically excited, diffusion-cooled laser system comprising two wall surfaces (14, 16) slightly spaced from one another and forming an optical waveguide, the width of said wall surfaces being a multiple of the space between them and said surfaces enclosing between them a flow-free discharge chamber, and also comprising an optically unstable resonator (34, 100) having a resonator beam path travelling through at least part of said discharge chamber and extending lengthwise of a resonator axis as well as having an expansion transverse to said resonator axis extending as far as at least one laser beam exiting from said resonator, said transverse expansion extending transversely to a longitudinal direction of said waveguide and approximately parallel to said wall surfaces,

**characterized in that**

said resonator (34, 100) is followed by a laser amplifier (40, 102), the amplifier beam path of said laser amplifier travelling through an additional part of said discharge chamber (30).

2. Laser system as defined in claim 1, characterized in that said resonator beam path and said amplifier beam path together have an expansion in the transverse direction (60, 106) corresponding at the most to the width of the wall surfaces (14, 16).

3. Laser system as defined in claim 2, characterized in that said resonator beam path and said amplifier beam path are located completely within said discharge chamber (30).

4. Laser system as defined in any of the preceding claims, characterized in that said amplifier beam path has an expansion in the transverse direction (60, 106) extending transversely to the incoming laser beam (36, 38, 108) and approximately parallel to the wall surfaces (14, 16) of the waveguide (12).

5. Laser system as defined in claim 4, characterized in that said laser amplifier (40, 102) has an optical means (64, 66; 114, 116) continuously reflecting the laser beam (36, 38, 108) with a transverse component.

6. Laser system as defined in claim 5, characterized in that said optical means (64, 66; 114, 116) has an amplifier beam path similar to the beam path of an unstable resonator.

7. Laser system as defined in any of the preceding claims, characterized in that said resonator (34, 100) and said laser amplifier (40, 102) are arranged side by side.

8. Laser system as defined in any of claims 1 to 6, characterized in that said resonator (34) and said laser amplifier (40) are arranged in series in the longitudinal direction (18) of said waveguide (12).

9. Laser system as defined in any of the preceding claims, characterized in that said laser amplifier (40, 102) has an optical axis (72, 118) extending parallel to the longitudinal direction (18) of said waveguide (12).

10. Laser system as defined in any of the preceding claims, characterized in that said laser amplifier (40, 102) has an optical axis (72, 118) arranged parallel to said resonator axis (44, 104).

11. Laser system as defined in claim 9 or 10, characterized in that said optical axis (72) of said laser amplifier (40) and said resonator axis (44) are arranged coaxially to one another.

12. Laser system as defined in any of claims 9 to 11, characterized in that an amplifier laser beam (42, 120) exiting from said laser amplifier (40, 102) extends parallel to said optical axis (72, 118) of said laser amplifier (40, 102).

13. Laser system as defined in any of the preceding claims, characterized in that said resonator (34, 100) is a confocal resonator.

14. Laser system as defined in any of the preceding claims, characterized in that said resonator beam path has outer beams (36, 38) extending parallel to one another.

15. Laser system as defined in any of the preceding claims, characterized in that said resonator axis (44, 104) extends in the longitudinal direction (18) of said waveguide (12).

16. Laser system as defined in any of the preceding claims, characterized in that said resonator (34) is a resonator symmetrical to said resonator axis (44).

17. Laser system as defined in any of the preceding claims, characterized in that said resonator beam path extends at the most over the width of said waveguide (12).

18. Laser system as defined in any of the preceding claims, characterized in that said laser amplifier (40) is provided with an optical means (64, 66) combining two parallel laser beams (36, 38) to form a single amplifier laser beam (42).

19. Laser system as defined in any of the preceding claims, characterized in that said amplifier beam path comprises outer beams (36, 38) extending parallel to one another.

20. Laser system as defined in any of the preceding claims, characterized in that said amplifier beam path extends at the most over the width of said waveguide (12).

21. Laser system as defined in any of the preceding claims, characterized in that said laser amplifier (40, 102) comprises confocal mirrors (64, 66; 114, 116).

22. Laser system as defined in any of claims 1 to 20, characterized in that said laser amplifier (40') comprises mirrors (64', 66') having wedge-shaped mirror surfaces (68', 70').

23. Laser system as defined in any of the preceding claims, characterized in that said resonator (34, 100) and said laser amplifier (40, 102) comprise mirrors (48, 52; 110, 112; 64, 66; 114, 116) having identically curved mirror surfaces (50, 58; 68, 70; 111, 113; 115, 117).

24. Laser system as defined in any of the preceding claims, characterized in that said mirrors (48, 52; 110, 112) of said resonator (34, 100) have mirror surfaces (50, 58; 111, 113) extending at right angles to the wall surfaces (14, 16) contiguous thereto.

25. Laser system as defined in any of the preceding claims, characterized in that said mirrors (64, 66; 114, 116) of said laser amplifier (40, 102) have mirror surfaces (68, 70, 115, 117) extending at right angles to the wall surfaces (14, 16) contiguous thereto.

26. Laser system as defined in claim 25, characterized in that said mirrors (48, 52; 110, 112; 64, 66; 114, 116) of said resonator (34, 100) and said laser amplifier (40, 102) have cylindrical mirror surfaces (50, 58, 68, 70; 111, 113, 115, 117).

27. Laser system as defined in any of the preceding claims, characterized in that said mirrors (48, 52; 110, 112; 64, 66; 114, 116) of said resonator (34, 100) and said laser amplifier (40, 102) close said waveguide (12).

28. Laser system as defined in any of the preceding claims, characterized in that said waveguide (12) is a strip-like waveguide having straight wall surfaces (14, 16) extending transversely to the longitudinal direction.

29. Laser system as defined in any of the preceding claims, characterized in that said waveguide (12) is angled in the longitudinal direction (18).

30. Laser system as defined in claim 29, characterized in that said waveguide (12) comprises at least two waveguide portions (82, 84) and that one waveguide portion (84) accommodates the resonator (34) and the other (82) the laser amplifier (40).

31. Laser system as defined in claim 29 or 30, characterized in that at least one deflecting member (92, 94, 98) is provided between said waveguide portions (82, 84) extending in a straight line in the longitudinal direction.

32. Laser system as defined in any of the preceding claims, characterized in that the wall surfaces (14, 16) are made of metal.

33. Laser system as defined in any of claims 1 to 31, characterized in that said wall surfaces (14, 16) are produced from a dielectric and bear plate-like electrodes (24, 26) on their outer sides.

34. Laser system as defined in any of the preceding claims, characterized in that an amplifier laser beam (42) exiting from said laser amplifier (40) is expanded by a cylindrical optical means (76) to form a beam of rays symmetrical on all sides.

**Revendications**

1. Système laser excité électriquement, refroidi par diffusion, comportant deux surfaces de parois (14, 16) situées à faible distance l'une de l'autre, constituant un guide d'ondes optique dont la largeur est un multiple de leurs distances et qui enferme entre elles un espace de décharge exempt de courant, et comportant un résonateur optique instable (34, 100) dont le trajet de rayons de résonateur traverse au moins une partie de l'espace de décharge et s'étend le long d'un axe de résonateur et présente une extension transversale à l'axe du résonateur au moins jusqu'à un rayon laser sortant du résonateur, l'extension transversale étant perpendiculaire à une direction longitudinale du guide d'ondes et à peu près parallèle aux surfaces de parois, **caractérisé en ce que**
un amplificateur laser (40, 102) dont le tracé de rayon d'amplificateur traverse une autre partie de l'espace de décharge (30) est disposé en aval du résonateur (34, 100).

2. Système selon la revendication 1, caractérisé en ce que le trajet de rayons du résonateur et le trajet de rayons d'amplificateur présentent ensemble une extension en direction transversale (60, 106) qui correspond au maximum à la largeur des surfaces de parois (14, 16).

3. Système laser selon la revendication 2, caractérisé en ce que le trajet de rayons du résonateur et le trajet de rayons de l'amplificateur sont totalement situés dans l'espace de décharge (30).

4. Système laser selon l'une des revendications précédentes, caractérisé en ce que le trajet de rayons d'amplificateur présente une extension orientée transversalement au rayon laser entrant (36, 38, 108) et à peu près parallèle aux surfaces de parois (14, 16) du guide d'ondes (12) en direction transversale (60, 106).

5. Système laser selon la revendication 4, caractérisé en ce que l'amplificateur laser (40, 102) comporte une optique (64, 66; 114, 116) réfléchissant en continu le rayon laser (36, 38, 108) avec une composante transversale.

6. Système laser selon la revendication 5, caractérisé en ce que l'optique (64, 66; 114, 116) présente un trajet de rayons d'amplificateur semblable au trajet de rayons d'un résonateur instable.

7. Système laser selon l'une des revendications précédentes, caractérisé en ce que le résonateur (34, 100) et l'amplificateur laser (40, 102) sont disposés côte-à-côte.

8. Système laser selon l'une des revendications 1 à 6, caractérisé en ce que le résonateur (34) et l'amplificateur laser (40) sont disposés l'un derrière l'autre dans la direction longitudinale (18) du guide d'ondes (12).

9. Système laser selon l'une des revendications précédentes, caractérisé en ce que l'amplificateur laser (40, 102) présente un axe optique (72, 78) de tracé parallèle à la direction longitudinale (18) du guide d'ondes (12).

10. Système laser selon l'une des revendications précédentes, caractérisé en ce que l'amplificateur laser (40, 102) présente un axe optique (82, 118) qui est parallèle à l'axe (44, 104) du résonateur.

11. Système laser selon la revendication 9 ou 10, caractérisé en ce que l'axe optique (72) de l'amplificateur laser (40) et l'axe (44) du résonateur sont disposés coaxiaux entre eux.

12. Système laser selon l'une des revendications 9 à 11 caractérisé en ce qu'un rayon laser d'amplificateur (42, 120) sortant de l'amplificateur laser (40, 102) est de tracé parallèle à l'axe optique (72,118) de l'amplificateur laser (40, 102).

13. Système laser selon l'une des revendications précédentes, caractérisé en ce que le résonateur (34, 100) est un résonateur à foyer commun.

14. Système laser selon l'une des revendications précédentes, caractérisé en ce que le trajet de rayons du résonateur comporte des rayons extérieurs (36, 38) parallèles entre eux.

15. Système laser selon l'une des revendications précédentes, caractérisé en ce que l'axe du résonateur (44, 104) s'étend dans la direction longitudinale (18) du guide d'ondes (12).

16. Système laser selon l'une des revendications précédentes, caractérisé en ce que le résonateur (34) est un résonateur symétrique par rapport à l'axe (44) du résonateur.

17. Système laser selon l'une des revendications précédentes, caractérisé en ce que le trajet de rayons du résonateur s'étend au maximum sur la largeur du guide d'ondes (12).

18. Système laser selon l'une des revendications précédentes, caractérisé en ce que l'amplificateur laser (40) est pourvu d'une optique (64, 66) rassemblant deux rayons laser parallèles (36, 38) en un unique rayon laser d'amplificateur(42).

19. Système laser selon l'une des revendications précédentes, caractérisé en ce que le trajet de rayons d'amplificateur présente des rayons extérieurs (36, 38) parallèles entre eux.

20. Système laser selon l'une des revendications précédentes, caractérisé en ce que le trajet de rayons d'amplificateur s'étend au maximum sur la largeur du guide d'ondes (12).

21. Système laser selon l'une des revendications précédentes, caractérisé en ce que l'amplificateur laser (40, 102) comprend des miroirs à foyer commun (64, 66; 114, 116).

22. Système laser selon l'une des revendications 1 à 20, caractérisé en ce que l'amplificateur laser (40′) comporte des miroirs (64′, 66′) à surfaces de miroir (68′, 70′) en forme de coins.

23. Système laser selon l'une des revendications précédentes, caractérisé en ce que le résonateur (34, 100) et l'amplificateur laser (40, 102) comportent des miroirs (48, 52; 110, 112; 64, 66; 114, 116) à surfaces de miroir incurvées de façon identique (50, 58; 68, 70; 111, 113; 115, 117).

24. Système laser selon l'une des revendications précédentes, caractérisé en ce que les surfaces de miroirs (50, 58, 111, 113) des miroirs (48, 52; 110, 112) du résonateur (34, 100) sont disposés perpendiculairement aux surfaces de parois (14, 16) qui leurs sont adjacentes.

25. Système laser selon l'une des revendications précédentes, caractérisé en ce que les surfaces de miroirs (68, 70, 115, 117) des miroirs (64, 66; 114, 116) de l'amplificateur laser (40, 102) sont disposés perpendiculairement aux surfaces de parois (14, 16) qui leurs sont adjacentes.

26. Système laser selon la revendication 25, caractérisé en ce que les miroirs (48, 52; 110, 112; 64, 66; 114, 116) du résonateur (34, 100) et de l'amplificateur laser (40, 102) présentent des surfaces cylindriques de miroirs (50, 58, 68, 70; 111, 113, 115, 117).

27. Système laser selon l'une des revendications précédentes, caractérisé en ce que les miroirs (48, 52; 110, 112; 64, 66; 114, 116) du résonateur (34, 100) et de l'amplificateur laser (40, 102) ferment le guide d'ondes (12).

28. Système laser selon l'une des revendications précédentes, caractérisé en ce que le guide d'ondes (12) est un guide d'ondes à ruban comportant des surfaces de parois (14, 16) orientées de façon rectiligne par rapport à la direction longitudinale.

29. Système laser selon l'une des revendications précédentes, caractérisé en ce que le guide d'ondes (12) est incliné dans sa direction longitudinale (18).

30. Système laser selon la revendication 29, caractérisé en ce que le guide d'ondes (12) comporte au moins deux éléments (82, 84) de guide d'ondes et en ce qu'un élément (84) de guide d'ondes reçoit le résonateur (34) et l'autre (82) l'amplificateur laser (40).

31. Système laser selon la revendication 29 ou 30, caractérisé en ce qu'il est prévu, entre les éléments (82, 84) de guide d'ondes à direction longitudinale orientée de façon rectiligne, au moins un élément de déviation (92, 94, 98).

32. Système laser selon l'une des revendications précédentes, caractérisé en ce que les surfaces de parois (14, 16) sont en métal.

33. Système laser selon l'une des revendications 1 à 31, caractérisé en ce que les surfaces de parois (14, 16) sont réalisées en un diélectrique et portent sur leurs côtés extérieurs des électrodes minces (24, 26).

34. Système laser selon l'une des revendications précédentes, caractérisé en ce qu"un rayon laser d'amplificateur (42) sortant de l'amplificateur laser (40) est élargi à l'aide d'une optique cylindrique (76) en un faisceau de rayon à symétrie de révolution.

FIG.1

FIG. 2

FIG. 3

EP 0 355 757 B1

FIG.4

EP 0 355 757 B1

FIG.5

FIG.6

FIG.7

FIG.8